# EUROPEAN PATENT SPECIFICATION

(11) **EP 3 449 669 B1**
(45) Date of publication and mention of the grant of the patent: **02.09.2020**
(21) Application number: 16742038.9
(22) Date of filing: 25.04.2016
(51) Int. Cl.: H04W 48/12, H04W 68/00

(54) **SYSTEM INFORMATION CONFIGURATION UPDATE IN A WIRELESS COMMUNICATION NETWORK**
AKTUALISIERUNG DER SYSTEMINFORMATIONSKONFIGURATION IN EINEM DRAHTLOSKOMMUNIKATIONSNETZWERK
MISE À JOUR DE CONFIGURATION D'INFORMATIONS SYSTÈME DANS UN RÉSEAU DE COMMUNICATION SANS FIL

(43) Date of publication of application: 06.03.2019
(73) Proprietor: Telefonaktiebolaget LM Ericsson (publ), 164 83 Stockholm (SE)
(72) Inventor: PRADAS, Jose Luis, 118 27 Stockholm (SE); REIAL, Andres, 211 17 Malmö (SE); RUNE, Johan, 181 29 Lidingö (SE)
(74) Representative: Zacco Sweden AB
(86) International application number: PCT/SE2016/050360
(87) International publication number: WO 2017/188866

(56) References cited:
- EP-A1- 2 523 516
- EP-A1- 2 800 430
- WO-A1-2013/149666
- WO-A1-2014/070048
- SAMSUNG: "Approach for EAB notification", 3GPP DRAFT; R2-115036, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Zhuhai; 20111010, 30 September 2011 (2011-09-30), XP050540572, [retrieved on 2011-09-30]

## Description

### TECHNICAL FIELD

The disclosure relates to two interrelated methods for indication of system information configuration updates to wireless terminals, and a network node, a wireless terminal, and two computer programs therefor.

### BACKGROUND

In long term evolution (LTE), tracking is a functionality which supports locating a user equipment (UE). A network is broken down into tracking areas (TA). The network configures a UE with a list with one or more tracking areas. This allows the network to locate the UE within a certain defined region. When the UE enters one tracking area which is not in the list provided by the network, the UE performs a tracking area update. This update assists the network to update the UE location information.

The LTE tracking area is indicated via system information. In LTE, a tracking area code (TAC) is contained in system information block type 1 (SIBi). The system information is therefore location dependent i.e. it includes location information.

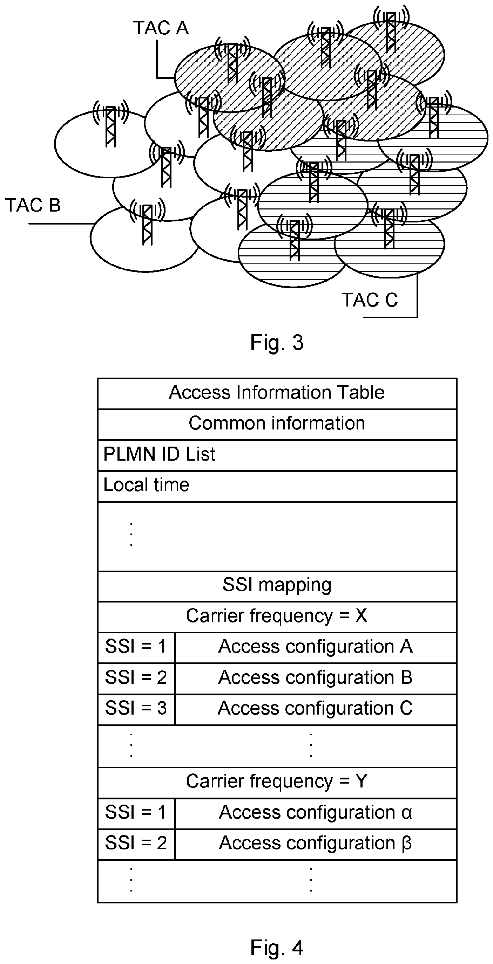

Fig. 3 schematically illustrates three different TAs shown with different patterns. Each TA has a different TAC, TAC A, TAC B, and TAC C.

Location information is typically used for paging purposes. The purpose of paging in LTE is to transmit paging information to a UE in radio resource control idle mode (RRC_IDLE) and/or to notify UEs in RRC_IDLE and UEs in RRC connected mode (RRC_CONNECTED) about a system information change and/ or, to transmit an earthquake and tsunami warning system (ETWS) primary notification and/or ETWS secondary notification and/or, to transmit a commercial mobile alert system (CMAS) notification.

The paging message in LTE may include a paging record - which comprises one or more UE identities and the core network domain, and different indications such as system information modification, ETWS indication, CMAS indication, and extended access barring (EAB) parameters modification indication.

When the network (NW) sends a paging message to the UE, the NW includes the paging radio network temporary identity (P-RNTI) in a physical downlink control channel (PDCCH). All UEs which decode the P-RNTI will acquire the paging message which will be contained in a physical downlink shared channel (PDSCH). The PDCCH indicates resources blocks allocated in the PDSCH for a paging channel (PCH) where the paging message is contained.

If end-user plane data is waiting in the network to be transmitted to the UE, the paging message will include the UE ID for which data is awaiting, and the UE will start a random access to get an RRC connection. When the UE is in RRC connected state, the network can transmit the user plane data in a downlink shared channel (DL-SCH).

If the paging message sets system information change flags, such as ETWS/CMAS flags, or EAB flags, the UE needs to read the system information and acquire the new/updated information according to how it is specified. In the case of warning messages, the system information block carrying such information may contain several hundreds of bits to deliver the message to all the UEs in a certain area.

A paper "A clean slate radio network designed for maximum energy performance" was published in Personal, Indoor, and Mobile Radio Communication (PIMRC), 2014 IEEE 25th Annual International Symposium on 2-5 Sept. 2014 Page(s):1300 - 1304. A two-step approach to provide a terminal with sufficient information to access a network is introduced therein. An access information table (AIT) is provided to present a table of potential different access information. In addition a system signature sequence or system signature index (SSI) is provided to select an entry in the AIT. The AIT is broadcasted to the terminal with a long periodicity, e.g. every 10 seconds. The SSI can be transmitted more frequently, e.g. every 100 ms.

The SSI transmission also contains synchronization features to obtain time and frequency alignment. The SSI is typically transmitted much more often than the AIT, and the AIT may not even be transmitted by all access nodes and/or on all carrier frequencies. The AIT is a collection of different system information configurations, see e.g. Fig. 4. Fig. 4 schematically illustrates an example of an AIT. The table is shown comprising a first common part including a public land mobile number (PLMN) ID list and a local time. The table is thereafter shown to include a SSI mapping for a first carrier frequency X, having three different SSIs 1-3 each having their own access configuration A-C. The table is finally shown to include another SSI mapping for a second carrier frequency Y, having two different SSIs 1-2 each having their own access configuration α-β.

These system information configurations may carry information related to the network access, such as random access parameters. An AIT hence consists of a number of table records, each containing a complete set of access configuration parameters. Such a table record can be referred to as a table entry. Each record or entry is also associated with an index, which is above referred to as the SSI.

EP 2523516 A1 discloses a method/apparatus for indicating a change in system information in accordance with an updated information to a terminal device.

### SUMMARY

It is an object of embodiments of the invention to improve update of system information configurations stored in a wireless terminal of a wireless communication network. The invention is defined by the independent claims. Furthermore, the embodiments of the invention are those defined by the claims. Moreover, examples, aspects and embodiments, which are not covered by the claims are presented not as embodiments of the invention, but as background art or examples useful for understanding the invention.

According to a first aspect, it is presented a method for indicating system information configuration updates to wireless terminals. The method is performed in a network node of a wireless communication network and comprises: determining that a system information configuration has been updated, and transmitting a paging message comprising information indicating to a wireless terminal receiving the paging message whether the updated system information configuration is relevant and/or how to react to the update.

By providing information in a paging message indicating whether an update is relevant and/or how to react to the update, a wireless terminal can avoid unnecessary updates of system information configurations stored in the wireless terminal, thus reducing energy consumption and network access delays.

The paging message may comprise at least one updated system information parameter of the updated system information configuration.

The paging message may comprise an index associated with an entry in a table, the table comprising multiple different system information configurations mapped to respective indices, the index indicating system information configuration affected by the update.

The paging message may comprise an indication to the wireless terminal to not use a stored copy of the indicated system information configuration until the wireless terminal has updated the stored copy of the system information configuration. Alternatively, the paging message may comprise an indication to the wireless terminal to not access the wireless communication network until the wireless terminal has updated a stored copy of the system information configuration.

The paging message may comprise a validity value associated with the index, the validity value enabling to determine a validity of system information configuration indicated by the index.

The paging message may comprise a validity area for the updated system information configuration, the validity area indicating an area wherein the updated system information configuration is applicable.

The paging message may comprise an indication of where and/or how updated system information configuration can be acquired.

According to a second aspect, it is presented a method for determining updates to system information configuration stored in a wireless terminal. The method is performed in the wireless terminal of a wireless communication network and comprises: receiving a paging message from a network node comprising information indicating to the wireless terminal whether an updated system information configuration is relevant for the wireless terminal and/or how to react to the update, and determining whether to update at least a part of system information configuration stored in the wireless terminal based on the information comprised in the received paging message.

The determining may comprise determining whether to update at least part of the system information configuration stored in the wireless terminal by comparing the stored system information configuration with the information comprised in the received paging message.

The paging message may comprise an index associated with an entry in a table, the table comprising multiple different system information configurations mapped to respective indices, the index indicating system information configuration affected by the update.

The wireless terminal may not use the stored system information configuration of the indicated index until the wireless terminal has updated the stored system information configuration. The wireless terminal may alternatively not access the wireless communication network until the wireless terminal has updated the stored system information configuration.

The paging message may comprise a validity value associated with the index, wherein determining may comprise determining whether stored system information configuration indicated by the index is valid based on the validity value, and determine to update the stored system information configuration when determined to be invalid.

The paging message may comprise a validity area for the updated system information configuration indicating whether the wireless terminal is in an area wherein the updated system information configuration is used and the determining may comprise determining to update the system information configuration stored in the wireless terminal when the wireless terminal is currently in the validity area.

The method may further comprise extracting the indication from the received paging message.

The method may further comprise updating at least a part of system information configuration stored in the wireless terminal when it is determined to update.

According to a third aspect, it is presented a network node for indicating system information configuration updates to wireless terminals of a wireless communication network. The network node comprises processing circuitry, including a processor, and a computer program product storing instructions that, when executed by the processor, causes the network node to: determine that a system information configuration has been updated, and transmit a paging message comprising information indicating to a wireless terminal receiving the paging message whether the updated system information configuration is relevant and/or how to react to the update.

According to a fourth aspect, it is presented a wireless terminal for determining updates to a system information configuration stored in a wireless terminal of a wireless communication network. The wireless terminal comprises processing circuitry, including a processor, and a computer program product storing instructions that, when executed by the processor, causes the wireless terminal to: receive a paging message from a network node comprising information indicating to the wireless terminal whether an updated system information configuration is relevant for the wireless terminal and/or how to react to the update, and determine whether to update at least a part of system information configuration stored in the wireless terminal based on the information comprised in the received paging message.

According to a fifth aspect, it is presented a network node for indicating system information configuration updates to wireless terminals of a wireless communication network. The network node comprises: a determination module configured to determine that a system information configuration has been updated, and a communication module configured to transmit a paging message comprising information indicating to a wireless terminal receiving the paging message whether the updated system information configuration is relevant and/or how to react to the update.

According to a sixth aspect, it is presented a wireless terminal for determining updates to a system information configuration stored in a wireless terminal of a wireless communication network. The wireless terminal comprises: a communication module configured to receive a paging message comprising information indicating to the wireless terminal whether an updated system information configuration is relevant for the wireless terminal and/or how to react to the update, a determination module configured to determine whether to update at least a part of system information configuration stored in the wireless terminal based on the information comprised in the received paging message.

According to a seventh aspect, it is presented a computer program for indicating system information configuration updates to wireless terminals of a wireless communication network. The computer program comprises computer program code which, when run on a processor of a network node in the wireless communication network, causes the network node to: determine that a system information configuration has been updated, and transmit a paging message comprising information indicating to a wireless terminal receiving the paging message whether the updated system information configuration is relevant and/or how to react to the update.

According to an eighth aspect, it is presented a computer program for determining updates to a system information configuration stored in a wireless terminal of a wireless communication network. The computer program comprises computer program code which, when run on a processor of a wireless terminal in the wireless communication network, causes the wireless terminal to: receive a paging message from a network node comprising information indicating to the wireless terminal whether an updated system information configuration is relevant for the wireless terminal and/or how to react to the update, and determine whether to update at least a part of system information configuration stored in the wireless terminal based on the information comprised in the received paging message.

According to a ninth aspect, it is presented a computer program product comprising a computer program and a computer readable storage means on which the computer program is stored.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

### BRIEF DESCRIPTION OF THE DRAWINGS

Fig. 1 is a schematic diagram illustrating an environment where embodiments presented herein can be applied;
Fig. 2 is a schematic diagram illustrating different set of nodes;
Fig. 3 is schematic diagram illustrating different tracking areas;
Fig. 4 is a schematic diagram illustrating an access information table;
Fig. 5 is a schematic diagram illustrating some components of a network node or a wireless terminal;
Figs. 6A-6B are flow charts illustrating methods for embodiments presented herein;
Fig. 7 is a schematic diagram showing functional modules of a network node or a wireless terminal according to embodiments; and
Fig. 8 is a schematic sequence chart illustrating an embodiment presented herein.

### DETAILED DESCRIPTION

The invention will now be described more fully hereinafter with reference to the accompanying drawings, in which certain embodiments of the invention are shown. This invention may, however, be embodied in many different forms and should not be construed as limited to the embodiments set forth herein; rather, these embodiments are provided by way of example so that this disclosure will be thorough and complete, and will fully convey the scope of the invention which is defined by the claims to those skilled in the art. Like numbers refer to like elements throughout the description.

In LTE, a paging message sent from a network to a user equipment (UE) indicates that there has been a change in system information but it does not carry further information. The UE does need to acquire master information block (MIB)/system information blocks (SIBs) to learn what system information that is new or updated.

In a system using the two-step approach described in the background section, with separate signalling of an access information table (AIT) and a system signature index (SSI), a wireless terminal may be configured with a discontinuous reception (DRX) cycle for monitoring paging, like in a long term evolution (LTE) system. The UE wakes up in time to check whether a paging message for it is transmitted. To read the paging, a UE with a long DRX cycle may need to re-synchronize to a down link (DL), using e.g. the SSI signal or another available synch signal.

As described above, the access information table (AIT) is used to provide system information configurations, and may be changed more or less frequently as the network is dynamically optimized. The network may e.g. be dynamically optimized based on load, and when nodes are turned on and off. A connected UE may receive a dedicated AIT update message, or a dedicated indication to read a broadcasted AIT. A dormant UE has a chance to read the AIT, verify its validity, and store a copy of it during wake-up periods according to its DRX configuration. The AIT contains a list of SSI, in which each SSI maps to a set of system information parameters of a system information configuration. When detecting and receiving a certain SSI, the UE retrieves the stored list, finds the matching SSI. The system information parameters in the entry associated with that SSI are used e.g. for accessing the network.

The AIT, which carries a set of possible system information configurations, may be updated at any point in time. This is similar to LTE, in which system information blocks (SIBs) can be changed.

When such updates happen, there is a need to indicate to the UEs that a change has happened. In LTE, this is solved by indicating with one bit, a flag, that there has been a change. Then, the UE is triggered to acquire updated system information (SI), i.e. to read the SI broadcasted in the serving cell. If the solution used in LTE is applied to a network applying the AIT/SSI two-step-approach, it may cause the following drawbacks:
The AIT may be transmitted by a macro layer and the UE may be served (or be camping) in a small cell which is within the macro cell coverage. These two layers may be in different frequencies. It may also be that one of the layers is defined by a portion of the total bandwidth and the other layer is another portion of the total available bandwidth (or the rest). The AIT may further be transmitted with a long periodicity, in the order of seconds. This means that every time an AIT change is indicated, an UE may take a long time to acquire the updated information. This could cause issues such as that the UE may access the network with the wrong (not updated) configuration. Another consequence could be increased delay to transmit data if the UE is aware that the system information or AIT has been updated, and the UE hence delays its network access and transmissions until it acquires the AIT again.

An UE may be in a DRX cycle meaning that it does not monitor the DL channels for a period of time. Using the AIT, the DRX cycle could be quite long, e.g. an hour. This means that UEs with long DRX cycles may miss the indications sent by the network. However, even if the UE happens to be listening to the DL when the network sends a system information change indication, the UE needs to remain awake monitoring the DL until the AIT is transmitted. As indicated above, the AIT may not be transmitted often. This will result in an increased UE energy consumption.

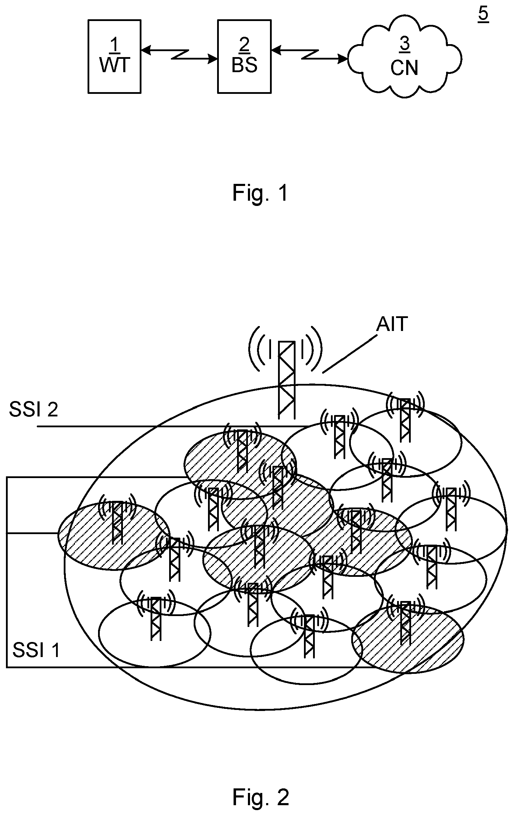

In LTE, each cell transmits its own system information. In a network applying AIT, it is foreseen that the AIT may be distributed by a macro layer covering a large area with several nodes which do not transmit any AIT or system information, see illustration in Fig. 2. Fig. 2 schematically illustrates three set of network nodes. A first one of the set of network nodes is transmitting SSI 1 and is shown with three distinct dashed areas. A second set of network nodes is transmitting SSI 2 and is shown with adjacent areas. A third set of network nodes, a macro area encompassing all areas of the first and second sets of network node, distributes an AIT which will contain random access parameters to access SSI 1 and SSI 2. This means that the AIT will cover many different configurations, potentially all configurations that are used in the entire network. If the AIT update only affects a limited set of configurations, the network will anyway need to inform all the UEs within an area in which the AIT is distributed, so all the UEs in that area have the updated information. Considering that the area could be quite large, potentially the entire network, and that there may be UEs with different DRX cycles, the network may need to send the system information change flag for a very long period of time, which increases signalling in that entire area.

A solution is presented to include in the paging message further information about system information configuration changes, instead of only a one bit change indicator, so that a wireless terminal selectively can determine appropriate actions. Wireless terminals, referred to as UE in 3GPP LTE terminology, may comprise, for example, cellular telephones, personal digital assistants, smart phones, laptop computers, handheld computers, machine-type communication/machine-to-machine (MTC/M2M) devices or other devices with wireless communication capabilities. Wireless terminals may refer to terminals that are installed in fixed configurations, such as in certain machine-to-machine applications, as well as to portable terminals, or terminals installed in motor vehicles.

The system information configuration is comprised of system information parameters that may comprise one or more of the following examples: access configuration parameters, PLMNs information, frequency bands information and selection, cell selection, access barring parameters, ETWS, and CMAS.

The further information may e.g. be one or more of the following: the AIT index, i.e. the SSI, which is updated; the AIT entry and the parameters changed in that configuration; indication(s) of where in the radio resource grid, such as time and frequency, the AIT is transmitted; importance and/or relevance of the system information change and actions upon it; and possible additional items. This further information can facilitate for the wireless terminal to quickly and/or efficiently acquire the updated AIT and can also form the basis for a decision of the wireless terminal of how to react to the indicated AIT update. Enabling such selective reactions minimizes the negative consequences for a wireless terminal in terms of e.g. delayed access and increased energy consumption.

By providing AIT updates, i.e. a new or a changed system information configuration, directly in paging messages the delay and energy problems mentioned above are eliminated. Therefore, the wireless terminal does not have to wait for the AIT to be transmitted. During the wireless terminal DRX cycle, the wireless terminal monitors the DL paging channel and then returns to a DRX sleep mode i.e. the wireless terminal stops monitoring the DL until the next paging occasion. If all updates are transmitted during the time the wireless terminal is listening, there is very limited impact on the battery consumption thereof.

By controlling the area and wireless terminals to which the wireless communication network sends updated AIT information using the paging message, signalling in the wireless communication network is reduced. In addition, the information about the AIT updates that is included in the paging message with the AIT update indication can facilitate for the wireless terminal to quickly and/or efficiently form the basis for a decision of the wireless terminal of how to react to the indicated AIT update. Enabling such selective reactions minimizes the negative consequences for a wireless terminal in terms of e.g. delayed access and increased energy consumption.

The transmission of system information configuration updates is thus more efficient. A wireless terminal can avoid unnecessary awake time to read possibly changed AIT information. A wireless terminal can also avoid unnecessary delay of a wireless communication network access and uplink (UL) transmission.

When a change in a system information configuration has happened, the wireless communication network uses paging messages to indicate to the wireless terminals that a change has happened.

For a network node responsible for transmission of the concerned paging message and also responsible for transmitting the AIT, it is trivial for the network node to determine that the AIT has been changed, since this occurred in the same network node.

For a network node responsible for transmission of the concerned paging message being another one than a network node responsible for transmitting the AIT, the network node responsible for transmission of the concerned paging message may determine a change by being informed either by the network node responsible for the AIT transmission or by an operation and maintenance system.

In both scenarios the change of the AIT may be triggered and requested by the operation and maintenance system or by one or more of the network nodes. The system or node may e.g. use a self-organizing network function that implies that a change of some system information parameter(s) would be appropriate. The change may alternatively be based on preconfigured rules. When certain circumstances change in the relevant part of the network (i.e. the part for which the AIT is valid), such as time of day, traffic load and/or access attempt frequency, the AIT information should be adapted accordingly.

A network node may e.g. be a base station, a baseband unit (i.e. containing part of the base station functionality), a controller node (such as a cluster head or a radio network controller) or a core network node (such as an Mobility Management Entity MME).

The presented solution may comprise the transmission of one or more of the following information comprised in the paging message:
- In one embodiment, the paging message indicates an SSI(s) indicating an entry in the AIT which the wireless communication network requests the wireless terminal to acquire again. The paging message may indicate that the wireless terminal should acquire and update the whole or complete AIT.
- In one embodiment, the paging message contains the SSI(s) and indications of the affected system information content for each of the SSIs. The indicated content may be the complete system information configuration for a SSI, or only information elements or parameters which a wireless terminal should replace, i.e. the wireless terminal keeps the rest of the information elements or parameters unchanged.
- The paging message may contain an AIT location field indicating where and/or how to access the AIT. The AIT location field may contain an associated SSI which the wireless terminal needs to camp to access and update the AIT. In addition, the AIT location field may indicate carrier frequency, broadcast period, frequency resource (i.e. exact frequency range(s) of AIT transmissions, e.g. subcarriers), timeslot, timing information, scrambling sequence, demodulation reference signal, or other configuration parameters for the wireless terminal to find where and/or how the AIT can be acquired.
- A validity value may be e.g. a value tag, a sequence number, or a checksum. The validity value could assist the wireless terminal to know if it already has the information sent by the wireless communication network. The validity value may apply to an AIT entry or the whole or complete AIT table. A paging message may comprise the validity value associated with an index, the validity value enabling to determine a validity of system information configuration indicated by the index. Determining whether a stored copy of system information configuration indicated by the index is valid may be based on the validity value, and it may be determined to update the stored system information configuration when it is determined to be invalid.
- A validity area may represent an area in which a certain set of SSIs are used. It may also represent an area in which the updated AIT is applied. The validity area may be a group of cells which the network indicates to the wireless terminal, grouped into a validity area. This grouped validity area may e.g. have a subset of SSIs A validity area may be defined by a tracking area (TA), and the TA may be indicated in the paging message. It may also be a set of TAs (indicated by TA identifiers), a set of cells (indicated with cell IDs), a set of access nodes (indicated with node IDs) or a set of topological entities higher in the hierarchy, e.g. a set of cells or access nodes which are grouped and given a label. The latter entity may be the access nodes covered by a central random access node (RAN) processing entity (which controls a set of access nodes), such as a C-RAN. Note that a set does not exclude that it is only one in this instance. Such an entity would be indicated by an appropriate identifier, e.g. a C-RAN identifier.

When a wireless terminal receives a paging message indicating update of system information configurations, it may react dependent thereon. The wireless terminal may have a set of rules of how to react to received information. The wireless terminal may alternatively or additionally react to received information based on indications or instructions additionally received in the paging message. Actions may be relevant, e.g. if the updated information content is not included or indicated in the message, and may be grouped in the following way:
- The wireless terminal is not to use system access configuration of an indicated SSI until it has retrieved the updated system information configuration associated with the indicated SSI. This provides a certain flexibility for the wireless terminal to acquire the AIT or update the values thereof at any point in time. Yet, the wireless terminal cannot use the indicated SSI(s) or indexes until updated, but may use system information configurations associated with other SSIs in the AIT.
- The wireless terminal is not to use system access configuration, and must acquire the AIT immediately, or update the parameters immediately and may not access the wireless communication network otherwise.

Examples of actions that are triggered dependent on different information sent to the wireless terminal in the paging message, i.e. examples of how the wireless terminal may react to an update indicated in the paging message, are presented in the following.

Example 1: The signalled validity area in the paging message is the area in which the wireless terminal currently is. The validity value indicates to the wireless terminal that it has stored an outdated value for one or more system information configuration parameters, and the area in which the wireless terminal is camping is using a SSI which has been updated. The wireless terminal will then acquire the AIT immediately, or update the parameters immediately and may not access the wireless communication network otherwise.

Example 2: The signalled validity area in the paging message is the area in which the wireless terminal currently is. The validity value indicates to the wireless terminal that it has stored an outdated value, and the area in which the wireless terminal is camping is using a different SSI than the one(s) which has/have been updated. The wireless terminal will then not use the system access configuration of the indicated SSI(s) until the value is updated, but may use the system access configurations of other SSI, e.g. the one used in the area the wireless terminal is camping in.

Example 3: The signalled validity area in the paging message is a different area than the area the wireless terminal is currently located in. The wireless terminal shall not use the system access configuration of the indicated SSI in the indicated area until the value is updated, but the actions of the wireless terminal are unaffected as long as it remains in an area outside the signalled validity area.

Example 4: The signalled validity area in the paging message is the area in which the wireless terminal currently is located. The validity value indicates to the wireless terminal that it has stored an updated, i.e. valid, value. The wireless terminal does not need to do anything as it has the latest information.

In different embodiments presented herein, and by suitable combinations of the system configuration parameters, a non-exhaustive list of some possible types of system information configuration update and/or ways to react to the update that a paging message may convey or indicate to the wireless terminal are the following:
- The system information configuration, e.g. AIT, has changed, but the network node is not affected. The wireless terminal may be within a coverage area of SSI_1 for a Node_A. The AIT has changed in such a way that one or more SSIs are affected, but not SSI_1. A paging message from Node_A then comprises an indication that the system information configuration has changed and also an indication that the SSI_1 configuration is not affected by this change.
- The system information configuration, e.g. AIT, has changed, but the access procedure to the network node is not affected.
- The system information configuration, e.g. AIT, has changed and the network node is affected, without further details of what is affected.
- The system information configuration, e.g. AIT, has changed and the network node is affected, but the access procedure to the network node is not affected.
- The system information configuration, e.g. AIT, has changed and the network node is affected when it comes to access procedures, but not otherwise.
- The system information configuration, e.g. AIT, has changed and the network node is affected when it comes to access procedures. The previous access procedure configuration may however still be used until an updated configuration has been retrieved. This may be used e.g. if parameters of an initial transmit power algorithm have been changed.
- The AIT has changed and the affected SSIs are listed.

Fig. 1 schematically illustrates a wireless communication network 5 environment where embodiments presented herein can be applied. A wireless terminal (WT) 1 is connectable to a network node 2 acting as a base station (BS) in terms of sending paging messages to the wireless terminal 1, in turn connectable to a core network 3.

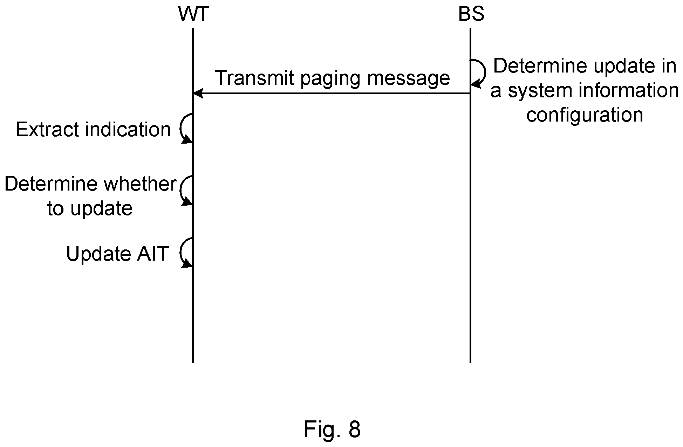

A sequence chart, according to an embodiment, schematically illustrates method steps with reference to Fig. 8. When a system configuration has been updated, the BS 2 first determines that a system information configuration has been updated and what parts of it that has been updated. The BS 2 thereafter sends a paging message to one or more WT(s) 1 in its operational area. The paging message comprises information indicating whether the updated system information configuration is relevant for the receiving wireless terminal and how to react to the update. A WT 1 receiving the paging message thereafter extracts the indication from the received paging message.

The extracted information may include indication of one or more of: system information changes, system information signalling changes, affected SSIs, affected wireless terminals, and whether the access node transmitting the paging message is affected by the system information change. The WT 1 then determines whether to update at least a part of its stored AIT based on the received and extracted indication. When the update is determined to be relevant for the WT 1, at least the relevant parts of the AIT are read from the paging message and updated in a copy thereof stored in the WT 1. The wireless terminal may e.g. check a sequence number of the received information and compare the received sequence number with a sequence number of stored corresponding information to determine if the stored information is outdated or not. When the update is determined not relevant for the WT1, no further action is needed by the wireless terminal.

Relevance of system information configuration changes may comprise one or more of the aspects: elements of system information configuration, e.g. parameters in one entry associated with one SSI, of the AIT that have changed; system information signalling mechanisms that have changed, system information index instances that are affected, e.g. SSIs that are affected because their respective associated AIT entry has been changed in one or more parameter(s); wireless terminals that are affected; and whether the network node transmitting the system information change indication is affected by the system information configuration update; and embedding information about one or more of the aspects in a paging message and transmitting the paging message.

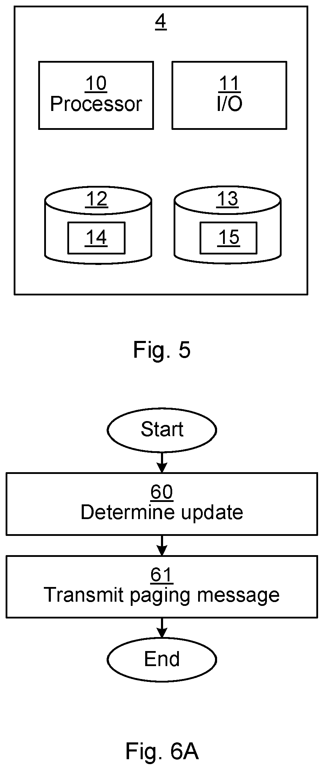

A method, according to an embodiment, for indicating system information configuration updates to wireless terminals 1, is presented with reference to Fig. 6A. The method is performed in a network node 2 of a wireless communication network 5 and comprises: determining 60 that a system information configuration has been updated, and transmitting 61 a paging message comprising information indicating to a wireless terminal receiving the paging message whether the updated system information configuration is relevant and/or how to react to the update.

In an alternative, the paging message may instead comprises information indicating to a wireless terminal receiving the paging message whether the updated system information configuration is relevant to it and/or indicating an expected action in response.

The paging message may comprise an index associated with an entry in a table, the table comprising multiple different system information configurations mapped to respective indices, the index indicating system information configuration affected by the update. The index may be a SSI and the table may be an AIT as described previously.

The paging message may comprises an indication to the wireless terminal to not use a stored copy of the indicated system information configuration until the wireless terminal has updated the stored copy of the system information configuration. The paging message may alternatively comprise an indication to the wireless terminal to not access the wireless communication network until the wireless terminal has updated a stored copy of the system information configuration.

The paging message may comprise a validity value associated with the index, the validity value enabling to determine a validity of system information configuration indicated by the index. The paging message may comprise a validity area for the updated system information configuration, the validity area indicating an area wherein the updated system information configuration is applicable. The paging message may comprise an indication of where and/or how updated system information configuration can be acquired.

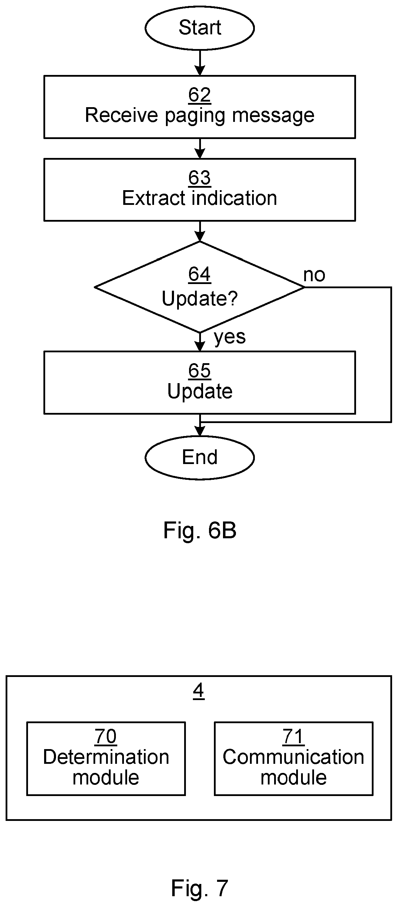

A method, according to an embodiment, for determining updates to a system information configuration stored in a wireless terminal 1, is presented with reference to Fig. 6B. The method is performed in the wireless terminal of a wireless communication network 5 and comprises: receiving 62 a paging message from a network node comprising information indicating to the wireless terminal whether an updated system information configuration is relevant for the wireless terminal and/or how to react to the update, and determining 64 whether to update at least a part of system information configuration stored in the wireless terminal based on the information comprised in the received paging message.

The determining 64 may comprise determining whether to update at least part of the system information configuration stored in the wireless terminal by comparing the stored system information configuration with the information comprised in the received paging message. The wireless terminal may e.g. check a sequence number of the received information and compare the received sequence number with a sequence number of stored corresponding information to determine if the stored information is outdated or not. To support this, the network may associate a sequence number with the entire system information and/or use one or more sequence numbers, each associated with a part of the system information. The network would increase a sequence number every time the information it is associated with is updated. Another way to enable similar possibilities for a wireless terminal to determine whether its stored information is still valid is to provide a piece of data that represents a condensed form of the information it is associated with. This data could e.g. be a hash or a redundancy check code (e.g. a Cyclic Redundancy Check, CRC) computed on the associated information.

The paging message may comprise an index associated with an entry in a table, the table comprising multiple different system information configurations mapped to respective indices, the index indicating system information configuration affected by the update. The wireless terminal may not use the stored system information configuration of the indicated index until the wireless terminal has updated the stored system information configuration. The wireless terminal may alternatively not access the wireless communication network until the wireless terminal has updated the stored system information configuration.

The paging message may comprise a validity value associated with the index, wherein determining 64 comprises determining whether stored system information configuration indicated by the index is valid based on the validity value, and determine to update the stored system information configuration when determined to be invalid.

The paging message may comprises a validity area for the updated system information configuration indicating whether the wireless terminal is in an area wherein the updated system information configuration is used and the determining 64 may comprise determining to update the system information configuration stored in the wireless terminal when the wireless terminal is currently in the validity area.

The method may further comprise extracting 63 the indication from the received paging message.

The method may further comprise updating 65 at least a part of system information configuration stored in the wireless terminal when it is determined 64 to update.

A network node, according to an embodiment, for indicating system information configuration updates to wireless terminals 1 of a wireless communication network 5, is presented with reference to Fig. 5. The network node 2 comprises processing circuitry, including: a processor 10 and a computer program product 12, 13 storing instructions that, when executed by the processor, causes the network node to: determine 60 that a system information configuration has been updated, and transmit 61 a paging message comprising information indicating to a wireless terminal receiving the paging message whether the updated system information configuration is relevant and/or how to react to the update.

A wireless terminal, according to an embodiment, for determining updates to a system information configuration stored in a wireless terminal of a wireless communication network 5, is presented with reference to Fig. 5. The wireless terminal 1 comprises processing circuitry, including: a processor 10 and a computer program product 12, 13 storing instructions that, when executed by the processor, causes the wireless terminal to: receive 62 a paging message from a network node comprising information indicating to the wireless terminal whether an updated system information configuration is relevant for the wireless terminal and/or how to react to the update, and determine 64 whether to update at least a part of system information configuration stored in the wireless terminal based on the information comprised in the received paging message.

A network node, according to an embodiment, for indicating system information configuration updates to wireless terminals 1 of a wireless communication network 5, is presented with reference to Fig. 7. The network node 2 comprises: a determination module 70 configured to determine 60 that a system information configuration has been updated, and a communication module 71 configured to transmit 61 a paging message comprising information indicating to a wireless terminal receiving the paging message whether the updated system information configuration is relevant and/or how to react to the update.

A wireless terminal, according to an embodiment, for determining updates to a system information configuration stored in a wireless terminal of a wireless communication network 5, is presented with reference to Fig. 7. The wireless terminal 1 comprises: a communication module 71 configured to receive 62 a paging message from a network node comprising information indicating to the wireless terminal whether an updated system information configuration is relevant for the wireless terminal and/or how to react to the update, and a determination module 70 configured to determine 64 whether to update at least a part of system information configuration stored in the wireless terminal based on the information comprised in the received paging message.

A computer program 14, 15, according to embodiment, for indicating system information configuration updates to wireless terminals 1 of a wireless communication network 5, is presented. The computer program comprises computer program code which, when run on a processor 10 of a network node 2 in the wireless communication network, causes the network node to: determine 60 that a system information configuration has been updated, and transmit 61 a paging message comprising information indicating to a wireless terminal receiving the paging message whether the updated system information configuration is relevant and/or how to react to the update.

A computer program 14, 15, according to an embodiment, for determining updates to a system information configuration stored in a wireless terminal of a wireless communication network 5, is presented, the computer program comprises computer program code which, when run on a processor 10 of a wireless terminal 1 in the wireless communication network, causes the wireless terminal to: receive 62 a paging message from a network node comprising information indicating to the wireless terminal whether an updated system information configuration is relevant for the wireless terminal and/or how to react to the update, and determine 64 whether to update at least a part of system information configuration stored in the wireless terminal based on the information comprised in the received paging message.

A computer program product 12, 13, according to an embodiment, comprising a computer program 14, 15 and a computer readable storage means on which the computer program 14, 15 is stored, is presented.

Fig. 5 is a schematic diagram showing some components of the network node 2 or the wireless terminal 1, generically numbered 4. A processor 10 may be provided using any combination of one or more of a suitable central processing unit, CPU, multiprocessor, microcontroller, digital signal processor, DSP, application specific integrated circuit etc., capable of executing software instructions of a computer program 14 stored in a memory. The memory can thus be considered to be or form part of the computer program product 12. The processor 10 may be configured to execute methods described herein with reference to Figs. 6A-6B.

The memory may be any combination of read and write memory, RAM, and read only memory, ROM. The memory may also comprise persistent storage, which, for example, can be any single one or combination of magnetic memory, optical memory, solid state memory or even remotely mounted memory.

A second computer program product 13 in the form of a data memory may also be provided, e.g. for reading and/or storing data during execution of software instructions in the processor 10. The data memory can be any combination of read and write memory, RAM, and read only memory, ROM, and may also comprise persistent storage, which, for example, can be any single one or combination of magnetic memory, optical memory, solid state memory or even remotely mounted memory. The data memory may e.g. hold other software instructions 15, to improve functionality for the network node 2 or the wireless terminal 1.

The network node 2 or wireless terminal 1 may further comprise an input/output, I/O, interface 11 including e.g. a user interface. The network node or wireless terminal may further comprise a receiver configured to receive signalling from other nodes, and a transmitter configured to transmit signalling to other nodes (not illustrated). Other components of the network node or wireless terminal are omitted in order not to obscure the concepts presented herein.

Fig. 7 is a schematic diagram showing functional blocks of the network node 2 or the wireless terminal 1, generically numbered 4. The modules may be implemented as only software instructions such as a computer program executing in the cache server or only hardware, such as application specific integrated circuits, field programmable gate arrays, discrete logical components, transceivers, etc. or as a combination thereof. In an alternative embodiment, some of the functional blocks may be implemented by software and other by hardware. The modules correspond to the steps in the methods illustrated in Figs. 6A-6B, comprising a determination module unit 70, and a communication module unit 71. In the embodiments where one or more of the modules are implemented by a computer program, it shall be understood that these modules do not necessarily correspond to process modules, but can be written as instructions according to a programming language in which they would be implemented, since some programming languages do not typically contain process modules.

The determination module 70 is for determining update in a system information configuration for the wireless communication network. This module corresponds to the determine step 60 of Fig. 6A, the extract step 63 of Fig. 6B, the determine step 64 of Fig. 6B, and the update step 65 of Fig. 6B. This module can e.g. be implemented by the processor 10 of Fig. 5, when running the computer program.

The communication module 71 is for controlling wireless communication with the wireless communication network. This module corresponds to the transmit step 61 of Fig. 6A, and the receive step 62 of Fig. 6B. This module can e.g. be implemented by the processor 10 of Fig. 5, when running the computer program.

The invention has mainly been described above with reference to a few embodiments. However, as is readily appreciated by a person skilled in the art, other embodiments than the ones disclosed above are equally possible within the scope of the invention, as defined by the appended patent claims.

## Claims

1. A method for indicating system information configuration updates to wireless terminals (1), the method being performed in a network node (2) of a wireless communication network (5) and comprising:
Determining (60) that a system information configuration has been updated; and
transmitting (61) a paging message comprising information indicating to a wireless terminal receiving the paging message whether the updated system information configuration is relevant and/or how to react to the update,
wherein the paging message comprises system signature indexes, SSIs, and, for each of the SSIs, only the system information parameters of the system information configuration affected by the update, and wherein the paging message further comprises a validity area for the updated system information configuration, the validity area indicating an area wherein the updated system information configuration is applicable.

2. The method as claimed in any of claim 1, wherein each SSI is associated with an entry in a table, the table comprising multiple different system information configurations mapped to respective indices, the SSI indicating the system information configuration affected by the update.

3. The method as claimed in claim 2, wherein the paging message comprises a validity value associated with one of the SSIs, the validity value enabling to determine a validity of the updated system information configuration indicated by the SSI.

4. A method for determining updates to a system information configuration stored in a wireless terminal (1) of a wireless communication network (5), the method being performed in the wireless terminal and comprising:
receiving (62) a paging message from a network node comprising information indicating to the wireless terminal whether an updated system information configuration is relevant for the wireless terminal and/or how to react to the update, wherein the paging message comprises system signature indexes, SSIs, and, for each of the SSIs, only the system information parameter system information parameters of the updated system information configuration affected by the update; and
determining (64) whether to update at least a part of system information configuration stored in the wireless terminal based on the information comprised in the received paging message; and wherein the paging message further comprises:
a validity area for the updated system information configuration indicating whether the wireless terminal is in an area wherein the updated system information configuration is used.

5. The method as claimed in claim 4, wherein the determining (64) comprises determining whether to update at least part of the system information configuration stored in the wireless terminal by comparing the stored system information configuration with the information comprised in the received paging message.

6. The method as claimed in any of claims 4 to 5, wherein each SSI is associated with an entry in a table, the table comprising multiple different system information configurations mapped to respective indices, the SSI indicating the updated system information configuration.

7. The method as claimed in claim 6, wherein the paging message comprises a validity value associated with one of the SSIs, wherein determining (64) comprises determining whether stored system information configuration indicated by the SSI is valid based on the validity value, and determine to update the stored system information configuration when determined to be invalid.

8. The method as claimed in any of claims 4 to 7, wherein the determining (64) comprising determining to update the system information configuration stored in the wireless terminal when the wireless terminal is currently in the validity area.

9. The method as claimed in any of claims 4 to 8, further comprising updating (65) at least a part of system information configuration stored in the wireless terminal when it is determined (64) to update.

10. A network node for indicating system information configuration updates to wireless terminals (1) of a wireless communication network (5), the network node (2) comprising:
a determination module (70) configured to determine (60) that a system information configuration has been updated; and
a communication module (71) configured to transmit (61) a paging message comprising system signature indexes, SSIs, and, for each of the SSIs, only the information indicating to a wireless terminal receiving the paging message whether the updated system information configuration is relevant and/or how to react to the update, wherein the paging message comprises system information parameters of the updated system information configuration affected by the update, and wherein the paging message further comprises -a validity area for the updated system information configuration, the validity area indicating an area wherein the updated system information configuration is applicable.

11. A wireless terminal (1) for determining updates to a system information configuration stored in the wireless terminal of a wireless communication network (5), the wireless terminal (1) comprising:
a communication module (71) configured to receive (62) a paging message from a network node comprising information indicating to the wireless terminal whether an updated system information configuration is relevant for the wireless terminal and/or how to react to the update, wherein the paging message comprises system signature indexes, SSIs, and, for each of the SSIs, only the system information parameters of the updated system information configuration affected by the update, and
wherein the paging message further comprises -a validity area for the updated system information configuration, the validity area indicating an area wherein the updated system information configuration is applicable; and
a determination module (70) configured to determine (64) whether to update at least a part of system information configuration stored in the wireless terminal based on the information comprised in the received paging message.

12. A computer program (14, 15) for indicating system information configuration updates to wireless terminals (1) of a wireless communication network (5), the computer program comprising computer program code which, when run on a processor (10) of a network node (2) in the wireless communication network, causes the network node to:
determine (60) that a system information configuration has been updated; and
transmit (61) a paging message comprising information indicating to a wireless terminal receiving the paging message whether the updated system information configuration is relevant and/or how to react to the update, wherein the paging message comprises system signature indexes, SSIs, and, for each of the SSIs, only the system information parameters of the updated system information configuration affected by the update, and
wherein the paging message further comprises -a validity area for the updated system information configuration, the validity area indicating an area wherein the updated system information configuration is applicable.

13. A computer program (14, 15) for determining updates to a system information configuration stored in a wireless terminal (1) of a wireless communication network (5), the computer program comprising computer program code which, when run on a processor (10) of a wireless terminal (1) in the wireless communication network, causes the wireless terminal to:
receive (62) a paging message from a network node comprising information indicating to the wireless terminal whether an updated system information configuration is relevant for the wireless terminal and/or how to react to the update, wherein the paging message comprises system signature indexes, SSIs, and, for each of the SSIs, only the system information parameters of the updated system information configuration affected by the update, and wherein the paging message further comprises -a validity area for the updated system information configuration, the validity area indicating an area wherein the updated system information configuration is applicable; and
determine (64) whether to update at least a part of system information configuration stored in the wireless terminal based on the information comprised in the received paging message.

## Patentansprüche

1. Verfahren zum Anzeigen von Systeminformationskonfigurationsaktualisierungen an drahtlosen Endvorrichtungen (1), wobei das Verfahren in einem Netzwerkknoten (2) eines drahtlosen Kommunikationsnetzwerks (5) durchgeführt wird und Folgendes umfasst:
Bestimmen (60), dass eine Systeminformationskonfiguration aktualisiert wurde; und
Senden (61) einer Paging-Nachricht mit Informationen, die einer drahtlosen Endvorrichtung, die die Paging-Nachricht empfängt, anzeigen, ob die aktualisierte Systeminformationskonfiguration relevant ist und/oder wie auf die Aktualisierung zu reagieren ist;
wobei die Paging-Nachricht Systemsignaturindizes, SSIs, und für jeden der SSIs nur die Systeminformationsparameter der Systeminformationskonfiguration umfasst, die von der Aktualisierung betroffen sind, und wobei die Paging-Nachricht ferner einen Gültigkeitsbereich für die aktualisierte Systeminformationskonfiguration umfasst, wobei der Gültigkeitsbereich einen Bereich angibt, in dem die aktualisierte Systeminformationskonfiguration anwendbar ist.

2. Verfahren nach Anspruch 1, wobei jeder SSI einem Eintrag in einer Tabelle zugeordnet ist; wobei die Tabelle mehrere verschiedene Systeminformationskonfigurationen umfasst, die den jeweiligen Indizes zugeordnet sind, wobei der SSI die von der Aktualisierung betroffene Systeminformationskonfiguration angibt.

3. Verfahren nach Anspruch 2, wobei die Paging-Nachricht einen Gültigkeitswert umfasst, der einem der SSIs zugeordnet ist, wobei der Gültigkeitswert ermöglicht, eine Gültigkeit der aktualisierten Systeminformationskonfiguration zu bestimmen, die von dem SSI angezeigt wird.

4. Verfahren zum Bestimmen von Aktualisierungen einer Systeminformationskonfiguration, die in einer drahtlosen Endvorrichtung (1) eines drahtlosen Kommunikationsnetzwerks (5) gespeichert ist; wobei das Verfahren in der drahtlosen Endvorrichtung durchgeführt wird und Folgendes umfasst:
Empfangen (62) einer Paging-Nachricht von einem Netzwerkknoten, die Informationen umfasst, die der drahtlosen Endvorrichtung anzeigen, ob eine aktualisierte Systeminformationskonfiguration für die drahtlose Endvorrichtung relevant ist und/oder wie auf die Aktualisierung zu reagieren ist; wobei die Paging-Nachricht Systemsignaturindizes, SSIs, und für jeden der SSIs nur die Systeminformationsparameter der aktualisierten Systeminformationskonfiguration umfasst, die von der Aktualisierung betroffen sind; und
Bestimmen (64), ob mindestens ein Teil der Systeminformationskonfiguration, die in der drahtlosen Endvorrichtung gespeichert ist, basierend auf den Informationen, die in der empfangenen Paging-Nachricht enthalten sind, aktualisiert werden soll; und wobei die Paging-Nachricht ferner Folgendes umfasst:
einen Gültigkeitsbereich für die aktualisierte Systeminformationskonfiguration, der angibt, ob sich die drahtlose Endvorrichtung in einem Bereich befindet, in dem die aktualisierte Systeminformationskonfiguration verwendet wird.

5. Verfahren nach Anspruch 4, wobei das Bestimmen (64) das Bestimmen umfasst, ob mindestens ein Teil der in der drahtlosen Endvorrichtung gespeicherten Systeminformationskonfiguration aktualisiert werden soll, durch Vergleichen der gespeicherten Systeminformationskonfiguration mit den in der empfangenen Paging-Nachricht enthaltenen Informationen.

6. Verfahren nach einem der Ansprüche 4 bis 5, wobei jeder SSI einem Eintrag in einer Tabelle zugeordnet ist; wobei die Tabelle mehrere verschiedene Systeminformationskonfigurationen umfasst, die den jeweiligen Indizes zugeordnet sind, wobei der SSI die aktualisierte Systeminformationskonfiguration angibt.

7. Verfahren nach Anspruch 6, wobei die Paging-Nachricht einen Gültigkeitswert umfasst, der einer der SSIs zugeordnet ist, wobei das Bestimmen (64) Folgendes umfasst: Bestimmen, ob die gespeicherte Systeminformationskonfiguration, die von dem SSI angegeben wird, basierend auf dem Gültigkeitswert gültig ist, und
Bestimmen, die gespeicherte Systeminformationskonfiguration zu aktualisieren, wenn bestimmt wird, dass sie ungültig ist.

8. Verfahren nach einem der Ansprüche 4 bis 7, wobei das Bestimmen (64) das Bestimmen umfasst, die in der drahtlosen Endvorrichtung gespeicherte Systeminformationskonfiguration zu aktualisieren, wenn sich die drahtlose Endvorrichtung derzeit im Gültigkeitsbereich befindet.

9. Verfahren nach einem der Ansprüche 4 bis 8, das ferner das Aktualisieren (65) mindestens eines Teils der Systeminformationskonfiguration, die in der drahtlosen Endvorrichtung gespeichert ist, umfasst, wenn bestimmt wird (64), eine Aktualisierung durchzuführen.

10. Netzwerkknoten zum Anzeigen von Systeminformationskonfigurationsaktualisierungen an drahtlosen Endvorrichtungen (1) eines drahtlosen Kommunikationsnetzwerks (5); wobei der Netzwerkknoten (2) Folgendes umfasst:
ein Bestimmungsmodul (70), das konfiguriert ist, zu bestimmen (60), dass eine Systeminformationskonfiguration aktualisiert wurde; und
ein Kommunikationsmodul (71), das konfiguriert ist, eine Paging-Nachricht zu senden (61), die Systemsignaturindizes, SSIs, umfasst und für jeden der SSIs nur die Informationen umfasst, die einer drahtlosen Endvorrichtung anzeigen, die die Paging-Nachricht empfängt, ob die aktualisierte Systeminformationskonfiguration relevant ist und/oder wie auf das Aktualisierung zu reagieren ist, wobei die Paging-Nachricht Systeminformationsparameter der aktualisierten Systeminformationskonfiguration umfasst, die von der Aktualisierung betroffen sind, und wobei die Paging-Nachricht ferner einen Gültigkeitsbereich für die aktualisierte Systeminformationskonfiguration umfasst, wobei der Gültigkeitsbereich einen Bereich angibt, in dem die aktualisierte Systeminformationskonfiguration anwendbar ist.

11. Drahtlose Endvorrichtung (1) zum Bestimmen von Aktualisierungen einer Systeminformationskonfiguration, die in der drahtlosen Endvorrichtung eines drahtlosen Kommunikationsnetzwerks (5) gespeichert ist; wobei die drahtlose Endvorrichtung (1) Folgendes umfasst:
ein Kommunikationsmodul (71), das konfiguriert ist, (62) eine Paging-Nachricht von einem Netzwerkknoten zu empfangen, die Informationen umfasst, die der drahtlosen Endvorrichtung anzeigen, ob eine aktualisierte Systeminformationskonfiguration für die drahtlose Endvorrichtung relevant ist und/oder wie auf die Aktualisierung zu reagieren ist; wobei die Paging-Nachricht Systemsignaturindizes, SSIs, und für jeden der SSIs nur die Systeminformationsparameter der aktualisierten Systeminformationskonfiguration umfasst, die von der Aktualisierung betroffen sind, und wobei die Paging-Nachricht ferner einen Gültigkeitsbereich für die aktualisierte Systeminformationskonfiguration umfasst, wobei der Gültigkeitsbereich einen Bereich angibt, in dem die aktualisierte Systeminformationskonfiguration anwendbar ist;
ein Bestimmungsmodul (70), das konfiguriert ist, zu bestimmen (64), ob mindestens ein Teil der Systeminformationskonfiguration, die in der drahtlosen Endvorrichtung gespeichert ist, basierend auf den Informationen, die in der empfangenen Paging-Nachricht enthalten sind, aktualisiert werden soll.

12. Computerprogramm (14, 15) zum Anzeigen von Systeminformationskonfigurationsaktualisierungen an drahtlosen Endvorrichtungen (1) eines drahtlosen Kommunikationsnetzwerks (5), wobei das Computerprogramm einen Computerprogrammcode umfasst, der, wenn er auf einem Prozessor (10) eines Netzwerkknotens (2) in dem drahtlosen Kommunikationsnetzwerk ausgeführt wird, bewirkt, dass der Netzwerkknoten Folgendes ausführt:
Bestimmen (60), dass eine Systeminformationskonfiguration aktualisiert wurde; und
Senden (61) einer Paging-Nachricht mit Informationen, die einer drahtlosen Endvorrichtung, die die Paging-Nachricht empfängt, anzeigen, ob die aktualisierte Systeminformationskonfiguration relevant ist und/oder wie auf die Aktualisierung zu reagieren ist;
wobei die Paging-Nachricht Systemsignaturindizes, SSIs, und für jede der SSIs nur die Systeminformationsparameter der aktualisierten Systeminformationskonfiguration, die von der Aktualisierung betroffen sind, umfasst und wobei die Paging-Nachricht ferner einen Gültigkeitsbereich für die aktualisierte Systeminformationskonfiguration umfasst, wobei der Gültigkeitsbereich einen Bereich angibt, in dem die aktualisierte Systeminformationskonfiguration anwendbar ist.

13. Computerprogramm (14, 15) zum Bestimmen von Aktualisierungen einer Systeminformationskonfiguration, die in einer drahtlosen Endvorrichtung (1) eines drahtlosen Kommunikationsnetzwerks (5) gespeichert ist, wobei das Computerprogramm einen Computerprogrammcode umfasst, der, wenn er auf einem Prozessor (10) einer drahtlosen Endvorrichtung (1) in dem drahtlosen Kommunikationsnetzwerk ausgeführt wird, bewirkt, dass die drahtlose Endvorrichtung Folgendes ausführt:
Empfangen (62) einer Paging-Nachricht von einem Netzwerkknoten, die Informationen umfasst, die der drahtlosen Endvorrichtung anzeigen, ob eine aktualisierte Systeminformationskonfiguration für die drahtlose Endvorrichtung relevant ist und/oder wie auf die Aktualisierung zu reagieren ist; wobei die Paging-Nachricht Systemsignaturindizes, SSIs, und für jeden der SSIs nur die Systeminformationsparameter der aktualisierten Systeminformationskonfiguration umfasst, die von der Aktualisierung betroffen sind, und wobei die Paging-Nachricht ferner einen Gültigkeitsbereich für die aktualisierte Systeminformationskonfiguration umfasst, wobei der Gültigkeitsbereich einen Bereich angibt, in dem die aktualisierte Systeminformationskonfiguration anwendbar ist; und
Bestimmen (64), ob mindestens ein Teil der Systeminformationskonfiguration, die in der drahtlosen Endvorrichtung gespeichert ist, basierend auf den Informationen, die in der empfangenen Paging-Nachricht enthalten sind, aktualisiert werden soll.

## Revendications

1. Procédé pour indiquer des mises à jour de configuration d'informations système à des terminaux sans fil (1), le procédé étant exécuté dans un nœud de réseau (2) d'un réseau de communication sans fil (5) et comprenant :
la détermination (60) qu'une configuration d'informations système a été mise à jour ; et
la transmission (61) d'un message de radiomessagerie comprenant des informations indiquant à un terminal sans fil recevant le message de radiomessagerie si la configuration d'informations système mise à jour est pertinente et / ou comment réagir à la mise à jour, dans lequel le message de radiomessagerie comprend des indices de signature système, SSI, et, pour chacun des SSI, seuls les paramètres d'informations système de la configuration d'informations système affectée par la mise à jour, et dans lequel le message de radiomessagerie comprend en outre
une zone de validité pour la configuration d'informations système mise à jour, la zone de validité indiquant une zone dans laquelle la configuration d'informations système mise à jour est applicable.

2. Procédé selon la revendication 1, dans lequel chaque SSI est associé à une entrée dans une table, la table comprenant plusieurs configurations d'informations système différentes mappées à des indices respectifs, le SSI indiquant la configuration d'informations système affectée par la mise à jour.

3. Procédé selon la revendication 2, dans lequel le message de radiomessagerie comprend une valeur de validité associée à l'un des SSI, la valeur de validité permettant de déterminer une validité de la configuration d'informations système mise à jour indiquée par le SSI.

4. Procédé pour déterminer des mises à jour d'une configuration d'informations système stockée dans un terminal sans fil (1) d'un réseau de communication sans fil (5), le procédé étant exécuté dans le terminal sans fil et comprenant:
la réception (62) d'un message de radiomessagerie depuis un nœud de réseau comprenant des informations indiquant au terminal sans fil si une configuration d'informations système mise à jour est pertinente pour le terminal sans fil et / ou comment réagir à la mise à jour, dans lequel le message de radiomessagerie comprend des indices de signature système, SSI et, pour chacun des SSI, seuls les paramètres d'informations système de la configuration d'informations système mise à jour affectée par la mise à jour ; et
la détermination (64) s'il faut mettre à jour au moins une partie de la configuration d'informations système stockée dans le terminal sans fil sur la base des informations comprises dans le message de radiomessagerie reçu ; et dans lequel le message de radiomessagerie comprend en outre :
une zone de validité pour la configuration d'informations système mise à jour indiquant si le terminal sans fil se trouve dans une zone dans laquelle la configuration d'informations système mise à jour est utilisée.

5. Procédé selon la revendication 4, dans lequel la détermination (64) comprend la détermination de la mise à jour d'au moins une partie de la configuration d'informations système stockée dans le terminal sans fil en comparant la configuration d'informations système stockée avec les informations comprises dans le message de radiomessagerie reçu.

6. Procédé selon l'une quelconque des revendications 4 à 5, dans lequel chaque SSI est associé à une entrée dans une table, la table comprenant plusieurs configurations d'informations système différentes mappées à des indices respectifs, le SSI indiquant la configuration d'informations système mise à jour.

7. Procédé selon la revendication 6, dans lequel le message de radiomessagerie comprend une valeur de validité associée à l'un des SSI, dans lequel la détermination (64) comprend la détermination de la validité de la configuration d'informations système stockée indiquée par le SSI sur la base de la valeur de validité, et la détermination de mettre à jour la configuration d'informations système stockée lorsqu'elle est déterminée comme étant non valide.

8. Procédé selon l'une quelconque des revendications 4 à 7, dans lequel la détermination (64) comprend la détermination de mettre à jour la configuration d'informations système stockée dans le terminal sans fil lorsque le terminal sans fil est actuellement dans la zone de validité.

9. Procédé selon l'une quelconque des revendications 4 à 8, comprenant en outre la mise à jour (65) d'au moins une partie de la configuration d'informations système stockée dans le terminal sans fil lorsque la mise à jour est déterminée (64).

10. Nœud de réseau pour indiquer des mises à jour de configuration d'informations système aux terminaux sans fil (1) d'un réseau de communication sans fil (5), le nœud de réseau (2) comprenant :
un module de détermination (70) configuré pour déterminer (60) qu'une configuration d'informations système a été mise à jour; et
un module de communication (71) configuré pour transmettre (61) un message de radiomessagerie comprenant des indices de signature système, SSI, et pour chacun des SSI, seuls les informations indiquant à un terminal sans fil recevant le message de radiomessagerie si la configuration d'informations système mise à jour est pertinente et / ou comment réagir à la mise à jour, dans lequel le message de radiomessagerie comprend des paramètres d'informations système de la configuration d'informations système mise à jour affectée par la mise à jour, et dans lequel le message de radiomessagerie comprend en outre une zone de validité pour la configuration d'informations système mise à jour, la zone de validité indiquant une zone dans laquelle la configuration d'informations système mise à jour est applicable.

11. Terminal sans fil (1) pour déterminer des mises à jour d'une configuration d'informations système stockée dans le terminal sans fil d'un réseau de communication sans fil (5), le terminal sans fil (1) comprenant :
un module de communication (71) configuré pour recevoir (62) un message de radiomessagerie provenant d'un nœud de réseau comprenant des informations indiquant au terminal sans fil si une configuration d'informations système mise à jour est pertinente pour le terminal sans fil et / ou comment réagir à la mise à jour, dans lequel le message de radiomessagerie comprend des indices de signature système, SSI, et pour chacun des SSI, seuls les paramètres d'informations système de la configuration d'informations système mise à jour affectée par la mise à jour, et dans lequel le message de radiomessagerie comprend en outre
une zone de validité pour la configuration d'informations système mise à jour, la zone de validité indiquant une zone dans laquelle la configuration d'informations système mise à jour est applicable ; et
un module de détermination (70) configuré pour déterminer (64) s'il faut mettre à jour au moins une partie de la configuration d'informations système stockée dans le terminal sans fil sur la base des informations comprises dans le message de radiomessagerie reçu.

12. Programme informatique (14, 15) pour indiquer des mises à jour de configuration d'informations système aux terminaux sans fil (1) d'un réseau de communication sans fil (5), le programme informatique comprenant un code de programme informatique qui, lorsqu'il est exécuté sur un processeur (10) d'un le nœud de réseau (2) dans le réseau de communication sans fil, amène le nœud de réseau à :
déterminer (60) qu'une configuration d'informations système a été mise à jour ; et
transmettre (61) un message de radiomessagerie comprenant des informations indiquant à un terminal sans fil recevant le message de radiomessagerie si la configuration d'informations système mise à jour est pertinente et / ou comment réagir à la mise à jour, dans lequel le message de radiomessagerie comprend des indices de signature système, SSI, et pour chacun des SSI, seuls les paramètres d'informations système de la configuration d'informations système mise à jour affectée par la mise à jour, et dans lequel le message de radiomessagerie comprend en outre une zone de validité pour la configuration d'informations système mise à jour, la zone de validité indiquant une zone dans laquelle la configuration d'informations système mise à jour est applicable.

13. Programme informatique (14, 15) pour déterminer des mises à jour d'une configuration d'informations système stockée dans un terminal sans fil (1) d'un réseau de communication sans fil (5), le programme informatique comprenant un code de programme informatique qui, lorsqu'il est exécuté sur un processeur (10) d'un terminal sans fil (1) dans le réseau de communication sans fil, amène le terminal sans fil à :
recevoir (62) un message de radiomessagerie d'un nœud de réseau comprenant des informations indiquant au terminal sans fil si une configuration d'informations système mise à jour est pertinente pour le terminal sans fil et / ou comment réagir à la mise à jour, dans lequel le message de radiomessagerie comprend des indices de signature système, SSI, et pour chacun des SSI, uniquement les paramètres d'informations système de la configuration d'informations système mise à jour affectée par la mise à jour, et dans lequel le message de radiomessagerie comprend en outre
une zone de validité pour la configuration d'informations système mise à jour, la zone de validité indiquant une zone dans laquelle la configuration d'informations système mise à jour est applicable ; et la détermination (64) s'il faut mettre à jour au moins une partie de la configuration d'informations système stockée dans le terminal sans fil sur la base des informations comprises dans le message de radiomessagerie reçu.
